# NEUE EUROPÄISCHE PATENTSCHRIFT

(11) **EP 2 647 607 B2**
(45) Veröffentlichungstag und Bekanntmachung des Hinweises auf die Entscheidung über den Einspruch: **16.12.2020**
(45) Hinweis auf die Patenterteilung: 31.05.2017
(21) Anmeldenummer: 12163045.3
(22) Anmeldetag: 03.04.2012
(51) Int. Cl.: B44C 5/04, C04B 111/28, C04B 26/14

(54) **Formteil sowie Verfahren zur Herstellung eines solchen Formteils**
Moulded part and method for producing such a moulded part
Élément de formage et procédé de fabrication d'un tel élément de formage

(43) Veröffentlichungstag der Anmeldung: 09.10.2013
(60) Teilanmeldung: 17172441.2
(73) Patentinhaber: STO SE & Co. KGaA, 79780 Stühlingen (DE)
(72) Erfinder: Pfeiffer, Christian, 89423 Gundelfingen (DE)
(74) Vertreter: Gottschalk, Matthias

(56) Entgegenhaltungen:
- EP-A2- 0 353 860
- WO-A1-2007/090445
- DE-A1- 3 715 487
- DE-A1- 10 241 978
- DE-A1-102005 000 684
- DE-A1-102005 029 844
- DE-A1-102006 048 897
- DE-A1-102008 027 986
- DE-A1-102010 009 147
- DE-U1- 20 013 200
- US-A- 4 031 684
- US-A- 5 076 978
- US-A- 5 787 667
- "Blähglas", WIKIPEDIA, 30 October 2011 (2011-10-30), Retrieved from the Internet: URL:https://de.wikipedia.org/wiki/Bl% C3%A4hglas
- "Warmeleitfahigkeit", Wikipedia-Artikel, 1 April 2012 (2012-04-01), Retrieved from the Internet: URL:https://de.wikipedia.org/w/index.php?t itle=W%C3%A4rmeleitf%C3%A4higkei t&oldid=101542745
- Überblick Plattendämmstoffe, Retrieved from the Internet: URL:http://docplayer.org/docview/ 50/26393184

## Beschreibung

Die Erfindung betrifft ein statisch unwirksames Formteil zur Befestigung an einer Gebäudewand oder -decke mit den Merkmalen des Oberbegriffs des Anspruchs 1. Ferner betrifft die Erfindung ein Verfahren zur Herstellung eines solchen Formteils unter Verwendung eines mineralischen Leichtfüllstoffs sowie die Verwendung geblähter Partikel eines glasreichen vulkanischen Gesteins als mineralischer Leichtfüllstoff.

### Stand der Technik

Unter der Bezeichnung "statisch unwirksames" Formteil wird vorliegend ein Bauelement verstanden, das selbsttragend ist, darüber hinaus jedoch keine statische Funktion besitzt. Das heißt, dass das Formteil beispielsweise nicht zur Ausbildung tragender Bauelemente geeignet ist. Das Formteil dient demnach vorrangig dekorativen Zwecken und kann sowohl im Innen- als auch im Außenbereich eingesetzt werden.

Für den Einsatz im Innenbereich sind insbesondere Elemente aus Gips oder Polystyrol bekannt, welche beispielsweise in Form von Profilen der Nachbildung von Stuck dienen. Für die Verwendung im Außenbereich sind derartige Elemente jedoch regelmäßig nicht geeignet, da sich Elemente aus Gips bei Einwirkung von Feuchtigkeit zersetzen und Elemente aus Polystyrol nicht ausreichend stoß- und schlagfest sind. Zwar könnte eine zusätzliche außenliegende Beschichtung, beispielsweise in Form einer Putzschicht, vorgesehen werden, um die ungünstigen Eigenschaften dieser bekannten Bauelemente zu kompensieren, dies würde jedoch SZ
einen erhöhten Zeit- und Kostenaufwand bedeuten. Es besteht demnach ein allgemeiner Bedarf nach witterungsbeständigen sowie ausreichend stoß- und schlagfesten Bauelementen für den Einsatz im Außenbereich, beispielsweise als dekorative Fassadenelemente.

Unter dem Markennamen "StoDeco" sind Architektur- bzw. Bauelemente bekannt, die einen mineralischen Leichtfüllstoff und ein Bindemittel umfassen und den vorstehend genannten Anforderungen bereits genügen. Als mineralischer Leichtfüllstoff findet hier ein Leichtgranulat auf Basis von Flugasche Verwendung. Bei der Flugasche handelt es sich um ein Nebenprodukt, das bei der Verbrennung von Kohle anfällt. In Abhängigkeit von der Zusammensetzung der Kohle kann die Qualität der Flugasche deutlichen Schwankungen unterworfen sein. Die Schwankungen sind beispielsweise an einer unterschiedlichen Färbung und/oder einer unterschiedlichen Schüttdichte der Flugasche erkennbar. Folglich muss die Flugasche einer Vorbehandlung unterzogen bzw. aufbereitet werden, was wiederum sehr kostenintensiv ist.

Weitere mineralische Leichtfüllstoffe sind auch unter der Bezeichnung Perlite bekannt. Perlite werden aus vulkanischem Glas hergestellt. Hierzu wird das vulkanische Glas auf etwa 800-1000°C erhitzt, wobei das Glas zu glühen beginnt und sein Volumen vervielfacht, indem es sich aufbläht. Die Expansionskräfte beim Blähen sind derart groß, dass die Partikel zerbersten. Demzufolge weisen herkömmliche Perlite eine unregelmäßige Form und eine offenzellige Struktur auf. Die offenzellige Struktur dieser Leichtfüllstoffe bedingt, dass herkömmliche Perlite gegebenenfalls einer Hydrophobierung unterzogen werden muss, wenn sie als mineralischer Leichtfüllstoff Verwendung finden sollen. Des Weiteren weist herkömmliche Perlite eine geringe Korndruckfestigkeit auf, was sich häufig als Nachteil erweist.

Ein Verfahren zur Herstellung von Perlite ist beispielhaft in der EP 0 353 860 A2 offenbart.

Aus der WO 2007/090445 A1 ist ferner eine Bauplatte bekannt, die Körner aus expandiertem Perlit umfasst, die zusätzlich hydrophobiert sind.

Die DE 102 41 978 A1 offenbart darüber hinaus ein nicht brennbares, feuchtigkeitsregulierendes und schallabsorbierendes Formteil aus einem Füllstoff, vorzugsweise einem mineralischen Leichtfüllstoff, und einem anorganischen Bindemittel bzw. Bindemittelgemisch.

Die Herstellung statisch unwirksamer Formteile unter Verwendung eines mineralischen Leichtfüllstoffs der vorstehend genannten Art erweist sich demnach als zeit- und kostenintensiv. Sofern auf eine aufwendige Vorbehandlung des mineralischen Leichtfüllstoffs jedoch verzichtet wird, ist der Einsatzbereich derartiger Formteile auf bestimmte Bereiche beschränkt.

Der vorliegenden Erfindung liegt daher die Aufgabe zugrunde, ein statisch unwirksames Formteil anzugeben, dass sowohl im Innenbereich als auch im Außenbereich einsetzbar und zudem kostengünstig herstellbar ist.

Zur Lösung der Aufgabe wird ein Formteil mit den Merkmalen des Anspruchs 1 sowie ein Verfahren zur Herstellung eines solchen Formteils mit den Merkmalen des Anspruchs 11 vorgeschlagen. Vorteilhafte Weiterbildungen der Erfindung sind in den jeweiligen Unteransprüchen angegeben.

### Offenbarung der Erfindung

Das vorgeschlagene statisch unwirksame Formteil zur Befestigung an einer Gebäudewand oder -decke enthält zumindest einen mineralischen Leichtfüllstoff und ein Bindemittel. Erfindungsgemäß ist vorgesehen, dass der mineralische Leichtfüllstoff geblähte Partikel wenigstens eines glasreichen vulkanischen Gesteins, insbesondere Obsidian oder Vermiculit, mit einer geschlossenzelligen Struktur und einer geschlossenen, vorzugsweise glas- oder sinterartigen Oberfläche umfasst. Dank der geschlossenzelligen Struktur und der geschlossenen Oberfläche nehmen die geblähten Partikel kein oder kaum Wasser auf, so dass eine Vorbehandlung der Partikel, insbesondere in Form einer Hydrophobierung, entfallen kann. Das hieraus hergestellte Formteil nimmt aufgrund der nicht-wasseraufnehmenden Eigenschaften der geblähten Partikel keine oder kaum Feuchtigkeit auf und ist somit witterungsbeständig, d.h. für den Einsatz im Außenbereich geeignet. Ferner ist das Formteil kostengünstiger herzustellen, da zumindest der Arbeitsschritt der Hydrophobierung entfallen kann.

Erfindungsgemäß beträgt der mineralische Leichtfüllstoffanteil 75 bis 95 Gew.-%, vorzugsweise 80 bis 90 Gew.-% bezogen auf das Gesamtgewicht der Ausgangsstoffe. Der relativ hohe Anteil wenigstens eines mineralischen Leichtfüllstoffs wirkt sich positiv auf die mechanischen Eigenschaften, insbesondere im Hinblick auf die Stoß- und Schlagfestigkeit des Formteils aus. Weiterhin umfasst der mineralische Leichtfüllstoffanteil geblähte Partikel wenigstens eines glasreichen vulkanischen Gesteins. Dies setzt voraus, dass ein blähbares glasreiches vulkanisches Gestein, d.h. ein glasreiches vulkanisches Gestein, das gebundenes Wasser (z.B. Kristallwasser) enthält, als Ausgangsstoff bzw. Rohstoff verwendet wird. Denn das enthaltene gebundene Wasser dehnt sich beim Erhitzen des Ausgangsstoffes bzw. Rohstoffes aus, verdunstet und hinterlässt die gewünschten Hohlräume. Dabei ist auf eine gleichmäßige Wärmeverteilung zu achten, um ein Zerbersten der Partikel zu verhindern bzw. geblähte Partikel mit einer geschlossenzelligen Struktur und einer geschlossenen Oberfläche zu erhalten. Auf diese Weise erhaltene geblähte Partikel zeichnen sich zudem durch eine weitgehend regelmäßige Kugelform aus. Als Ausgangsstoffe bzw. Rohstoffe eignen sich glasreiche vulkanische Gesteine, wie beispielsweise Obsidian, Vermiculit und/oder Bims.

Der Bindemittelanteil beträgt erfindungsgemäß 5 bis 25 Gew.-%, vorzugsweise 10 bis 20 Gew.-% bezogen auf das Gesamtgewicht der Ausgangsstoffe. Aufgrund des relativ geringen Bindemittelanteils weist das Formteil die Anmutung eines natürlichen Werkstoffs auf. Zugleich ist ein stabiler Verbund der Partikel untereinander gewährleistet. Ferner erfindungsgemäß umfasst der Bindemittelanteil wenigstens ein organisches Bindemittel, insbesondere Epoxidharz. Organische Bindemittel weisen gegenüber mineralischen Bindemitteln eine höhere Bindekraft auf, so dass der Bindemittelanteil gering gehalten werden kann. Als besonders geeignet hat sich der Einsatz von Epoxidharz als Bindemittel erwiesen.

Bevorzugt beträgt die Rohdichte des Formteils 450 bis 750 kg/m³, vorzugsweise 500 bis 700 kg/m³ und weiterhin vorzugsweise 550 bis 650 kg/m³. Aufgrund der Rohdichte weist das Formteil eine ausreichende Stoß- und Schlagfestigkeit für die Anwendung als Fassadenelement auf.

Ferner bevorzugt beträgt der Elastizitätsmodul (E-Modul) des Formteils 1450 bis 2000 N/mm², vorzugsweise 1600 bis 1800 N/mm². Gegenüber den eingangs genannten Formteilen, welche einen mineralischen Leichtfüllstoff auf Basis von Flugasche enthalten und einen E-Modul zwischen 2000 und 2200 N/mm² besitzen, weist ein erfindungsgemäßes Formteil eine höhere Elastizität auf, was sich positiv auf die Kantenstabilität des Formteils auswirkt.

Des Weiteren bevorzugt beträgt die Wärmeleitfähigkeit λ des Formteils < 200 mW/(m*K). vorzugsweise < 175 mW/(m*K), weiterhin vorzugsweise < 150 mW/(m*K). Es weist demnach wärmedämmende Eigenschaften auf, welche bei Einsatz als Fassadenelement der Ausbildung einer unerwünschten Wärmebrücke entgegen wirken.

Vorzugsweise ist das Formteil nicht brennbar und weiterhin vorzugsweise der Brandklasse A2 - s1, d0 nach EN 13501-1 zuzuordnen. Dadurch erweitert sich der Einsatzbereich des Formteils auf Bereiche, bei denen es Brandschutzanforderungen zu erfüllen gilt.

Gemäß einer ersten bevorzugten Ausführungsform der Erfindung ist das Formteil profilförmig und damit zur Ausbildung von selbsttragenden Gesimsen, Fensterbänken, Fensterbögen, insbesondere Rund-, Korb- und Spitzbögen, und dergleichen geeignet. Ein solches Formteil ist insbesondere als dekoratives Fassadenelement einsetzbar, beispielsweise zur Gliederung und/oder Profilierung einer Fassade. Da es statisch unwirksam ist, kann es keine tragende Funktion übernehmen.

Gemäß einer weiteren bevorzugten Ausführungsform der Erfindung ist das Formteil platten- oder blockförmig und damit zur Ausbildung von selbsttragenden Kopfsteinen, Kapitellen, Sohlbankstützen und dergleichen geeignet. Auch ein solches Formteil ist demnach insbesondere als dekoratives Fassadenelement einsetzbar, beispielsweise zur Gliederung und/oder Profilierung einer Fassade. Da es statisch unwirksam ist, kann es keine tragende Funktion übernehmen.

Alternativ zur Ausbildung als Vollkörper kann das Formteil ferner als Hohlkörper ausgebildet sein. Dies gilt insbesondere für profil- oder blockförmige Formteile. Die Herstellung eines als Hohlkörper ausgebildeten Formteils erfordert weniger Material und ist somit kostengünstiger. Zudem weist ein als Hohlkörper ausgebildetes Formteil den Vorteil auf, dass es gegenüber einem massiv ausgebildeten Formteil ein geringeres Gewicht besitzt. Dadurch wird die Handhabbarkeit des Formteils, beispielsweise auf der Baustelle, verbessert.

Zur Lösung der eingangs genannten Aufgabe wird des Weiteren ein Verfahren zur Herstellung eines erfindungsgemäßen Formteils vorgeschlagen, bei welchem zumindest ein mineralischer Leichtfüllstoff und ein organisches Bindemittel vermischt werden und die Mischung in einer Form unter Zugabe von Druck und/oder Wärme zu einem Formteil verpresst wird. Das erfindungsgemäße Verfahren zeichnet sich dadurch aus, dass geblähte Partikel wenigstens eines glasreichen vulkanischen Gesteins, insbesondere Obsidian oder Vermiculit mit einer geschlossenzelligen Struktur und einer geschlossenen, vorzugsweise glas- oder sinterartigen Oberfläche als mineralischer Leichtfüllstoff verwendet werden. Aufgrund der geschlossenzelligen Struktur und der geschlossenen Oberfläche nehmen die geblähten Partikel kein oder kaum Wasser auf. Eine Vorbehandlung zur Hydrophobierung kann somit entfallen. Dadurch wird das Verfahren einfacher und kostengünstiger. Zudem erstrecken sich die Eigenschaften der geblähten Partikel auf das hieraus hergestellte Formteil. Das heißt, dass das nach dem erfindungsgemäßen Verfahren hergestellte Formteil keine oder kaum Feuchtigkeit aufnimmt und somit witterungsbeständig bzw. für den Einsatz im Außenbereich geeignet ist.

Ferner erfindungsgemäß werden 75 bis 95 Gew.-%, vorzugsweise 80 bis 90 Gew.-% wenigstens eines mineralischen Leichtfüllstoffs und 5 bis 25 Gew.-%, vorzugsweise 10 bis 20 Gew.-% wenigstens eines Bindemittels jeweils bezogen auf das Gesamtgewicht der Ausgangsstoffe verwendet. Der relativ hohe Anteil wenigstens eines mineralischen Leichtfüllstoffs führt zu einem Formteil, das als nicht brennbar zu klassifizieren, insbesondere der Brandklassifizierung A2 - s1, d0 nach EN 13501-1 zuzuordnen ist. Ferner weist ein solches Formteil gute mechanische Eigenschaften auf und ist insbesondere schlag- und stoßfest. Der Bindemittelanteil ist zudem ausreichend, um einen stabilen Verbund der geblähten Partikel untereinander zu gewährleisten.

Als mineralischer Leichtfüllstoff werden geblähte Partikel wenigstens eines glasreichen vulkanischen Gesteins verwendet. Ausgangsstoff bzw. Rohstoff ist demnach wenigstens ein glasreiches vulkanisches Gestein, das gebundenes Wasser (z.B. Kristallwasser) enthält und demnach blähbar ist. Als Ausgangsstoff bzw. Rohstoff eignen sich demnach insbesondere die Gesteine Obsidian, Vermiculit und/oder Bims. Um ein Zerbersten der Partikel beim Blähen zu verhindern und geblähte Partikel mit einer geschlossenzelligen Struktur und einer geschlossenen, vorzugsweise glas- oder sinterartigen Oberfläche zu erhalten, ist auf eine gleichmäßige Wärmeverteilung zu achten.

Weiterhin erfindungsgemäß wird wenigstens ein organisches Bindemittel, insbesondere Epoxidharz, als Bindemittel verwendet. Organische Bindemittel weisen gegenüber mineralischen Bindemitteln eine höhere Bindekraft auf, so dass selbst bei einem relativ geringen Bindemittelanteil ein stabiler Verbund der Partikel untereinander erreicht werden kann.

Ferner wird vorgeschlagen, dass das Formteil nach der Entnahme aus der Form zugeschnitten und/oder einem weiteren Formgebungsprozess unterzogen wird. Beispielsweise können profilförmige Formteile auf Länge geschnitten oder plattenförmige Formteile aus Blöcken herausgeschnitten werden. In einem zusätzlichen Formgebungsprozess kann das Formteil zudem profiliert oder strukturiert werden. Beispielsweise kann das Formteil mit einem bestimmten Dekor versehen werden. Vorzugsweise erfolgt die zusätzliche Formgebung mittels Fräsen.

Darüber hinaus wird die Verwendung geblähter Partikel mit einer geschlossenzelligen Struktur und einer geschlossenen, vorzugsweise glas- oder sinterartigen Oberfläche wenigstens eines glasreichen vulkanischen Gesteins als mineralischer Leichtfüllstoff in einem statisch unwirksamen Formteil zur Befestigung an einer Gebäudewand oder -decke vorgeschlagen. Aufgrund der geschlossenzelligen Struktur und der geschlossenen Oberfläche nehmen derartige geblähte Partikel kein oder kaum Wasser auf und bedürfen demnach keiner zusätzlichen Hydrophobierung, um die Witterungsbeständigkeit eines hieraus hergestellten Formteils zu gewährleisten. Das Formteil ist demnach vielseitig einsetzbar, insbesondere für den Einsatz im Außenbereich geeignet, und - im Vergleich zu anderen auf dem Markt erhältlichen statisch unwirksamen Formteilen zur Befestigung an einer Gebäudewand oder - decke - zudem kostengünstiger herzustellen.

## Patentansprüche

1. Statisch unwirksames Formteil zur Befestigung an einer Gebäudewand oder - decke, wobei das Formteil zumindest einen mineralischen Leichtfüllstoff und ein Bindemittel enthält,
**dadurch gekennzeichnet,**
a. **dass** der mineralische Leichtfüllstoffanteil 75 bis 95 Gew.-% bezogen auf das Gesamtgewicht der Ausgangsstoffe beträgt und der mineralische Leichtfüllstoff geblähte Partikel wenigstens eines glasreichen vulkanischen Gesteins, insbesondere Obsidian oder Vermiculit, mit einer geschlossenzelligen Struktur und einer geschlossenen, vorzugsweise glas- oder sinterartigen Oberfläche umfasst,
b. ferner, dass der Bindemittelanteil 5 bis 25 Gew.-% bezogen auf das Gesamtgewicht der Ausgangsstoffe beträgt und wenigstens ein organisches Bindemittel, insbesondere Epoxidharz, umfasst.

2. Formteil nach Anspruch 1,
**dadurch gekennzeichnet, dass** der mineralische Leichtfüllstoffanteil 80 bis 90 Gew.-% bezogen auf das Gesamtgewicht der Ausgangsstoffe beträgt.

3. Formteil nach Anspruch 1 oder 2,
**dadurch gekennzeichnet, dass** der Bindemittelanteil 10 bis 20 Gew.-% bezogen auf das Gesamtgewicht der Ausgangsstoffe beträgt.

4. Formteil nach einem der vorhergehenden Ansprüche,
**dadurch gekennzeichnet, dass** die Rohdichte des Formteils 450 bis 750 kg/m³, vorzugsweise 500 bis 700 kg/m³, weiterhin vorzugsweise 550 bis 650 kg/m³ beträgt.

5. Formteil nach einem der vorhergehenden Ansprüche,
**dadurch gekennzeichnet, dass** das Elastizitätsmodul des Formteils 1450 bis 2000 N/mm², vorzugsweise 1600 bis 1800 N/mm² beträgt.

6. Formteil nach einem der vorhergehenden Ansprüche,
**dadurch gekennzeichnet, dass** die Wärmeleitfähigkeit λ des Formteils < 200 mW/(m^{∗}K), vorzugsweise < 175 mW/(m^{∗}K), weiterhin vorzugsweise < 150 mW/(m^{∗}K) beträgt.

7. Formteil nach einem der vorhergehenden Ansprüche,
**dadurch gekennzeichnet, dass** das Formteil nicht brennbar ist, wobei das Formteil vorzugsweise der Brandklasse A2 - s1, d0 nach EN 13501-1 zuzuordnen ist.

8. Formteil nach einem der vorhergehenden Ansprüche,
**dadurch gekennzeichnet, dass** das Formteil profilförmig ist und zur Ausbildung von selbsttragenden Gesimsen, Fensterbänken, Fensterbögen, insbesondere Rund-, Korb- und Spitzbögen, und dergleichen geeignet ist.

9. Formteil nach einem der vorhergehenden Ansprüche,
**dadurch gekennzeichnet, dass** das Formteil platten- oder blockförmig ist und zur Ausbildung von selbsttragenden Kopfsteinen, Kapitellen, Sohlbankstützen und dergleichen geeignet ist.

10. Formteil nach einem der vorhergehenden Ansprüche,
**dadurch gekennzeichnet, dass** das Formteil als Hohlkörper ausgebildet ist.

11. Verfahren zur Herstellung eines Formteils nach einem der vorhergehenden Ansprüche, bei welchem zumindest ein mineralischer Leichtfüllstoff und ein Bindemittel vermischt werden und die Mischung in einer Form unter Zugabe von Druck und/oder Wärme zu einem Formteil verpresst wird,
**dadurch gekennzeichnet, dass** 75 bis 95 Gew.-% wenigstens eines mineralischen Leichtfüllstoffs und 5 bis 25 Gew.-% wenigstens eines Bindemittels jeweils bezogen auf das Gesamtgewicht der Ausgangsstoffe verwendet werden, wobei geblähte Partikel wenigstens eines glasreichen vulkanischen Gesteins, insbesondere Obsidian oder Vermiculit, mit einer geschlossenzelligen Struktur und einer geschlossenen, vorzugsweise glas- oder sinterartigen Oberfläche als mineralischer Leichtfüllstoff und zumindest ein organisches Bindemittel verwendet werden.

12. Verfahren nach Anspruch 11,
**dadurch gekennzeichnet, dass** 80 bis 90 Gew.-% wenigstens eines mineralischen Leichtfüllstoffs und 10 bis 20 Gew.-% wenigstens eines Bindemittels jeweils bezogen auf das Gesamtgewicht der Ausgangsstoffe verwendet werden.

13. Verfahren nach Anspruch 11 oder 12,
**dadurch gekennzeichnet, dass** Epoxidharz als Bindemittel verwendet wird.

14. Verfahren nach einem der Ansprüche 11 bis 13,
**dadurch gekennzeichnet, dass** das Formteil nach der Entnahme aus der Form zugeschnitten und/oder einem weiteren Formgebungsprozess, vorzugsweise mittels Fräsen, unterzogen wird.

## Claims

1. Structurally ineffective moulded part for fastening to a building wall or ceiling, wherein the moulded part contains at least one lightweight mineral filler and one binding agent,
**characterised**
a. **in that** the lightweight mineral filler constitutes 75 to 95% by weight of the total weight of the starting materials, and the lightweight mineral filler comprises foamed particles of at least one glass-rich volcanic rock, particularly obsidian or vermiculite, with a closed-cell structure and a closed, preferably glass-like or sinter-like surface,
b. further, that the binding agent constitutes 5 to 25% by weight of the total weight of the starting materials and comprises at least one organic binding agent, particularly epoxy resin.

2. Moulded part according to claim 1,
**characterised in that** the lightweight mineral filler constitutes 80 to 90% by weight of the total weight of the starting materials.

3. Moulded part according to claim 1 or 2,
**characterised in that** the binding agent constitutes 10 to 20% by weight of the total weight of the starting materials.

4. Moulded part according to any one of the preceding claims, **characterised in that** the moulded part has a bulk density of 450 to 750 kg/m³, preferably 500 to 700 kg/m³, more preferably 550 to 650 kg/m³.

5. Moulded part according to any one of the preceding claims,
**characterised in that** the moulded part has a modulus of elasticity of 1450 to 2000 N/mm², preferably 1600 to 1800 N/mm².

6. Moulded part according to any one of the preceding claims,
**characterised in that** the thermal conductivity λ of the moulded part is <200 mW/(m^{∗}K), preferably <175 mW/(m^{∗}K), more preferably <150 mW/(m^{∗}K).

7. Moulded part according to any one of the preceding claims,
**characterised in that** the moulded part is not combustible, wherein the moulded part can be classified preferably in fire class A2 - s1, d0 according to EN 13501-1.

8. Moulded part according to any one of the preceding claims,
**characterised in that** the moulded part is profiled, and is suitable for constructing self-supporting cornices, windowsills, window arches, particularly round arches, basket arches and ogives and the like.

9. Moulded part according to any one of the preceding claims,
**characterised in that** the moulded part is in the form of a panel or block, and is suitable for constructing self-supporting headers, capitals, windowledge supports and the like.

10. Moulded part according to any one of the preceding claims,
**characterised in that** the moulded part is constructed as a hollow body.

11. Method for manufacturing a moulded part according to any one of the preceding claims, in which at least one lightweight mineral filler and one binding agent are mixed, and the mixture is compressed to form a moulded part in a mould by applying pressure and/or heat,
**characterised in that** 75 to 95% by weight of at least one lightweight mineral filler and 5 to 25% by weight of at least one binding agent, each relative to the total weight of the starting materials, are used, wherein foamed particles of at least one glass-rich volcanic rock, particularly obsidian or vermiculite, with a closed-cell structure and a closed, preferably glass-like or sinter-like surface as the lightweight mineral filler and at least one organic binding agent are used.

12. Method according to claim 11,
**characterised in that** 80 to 90% by weight of at least one lightweight mineral filler and 10 to 20% by weight of at least one binding agent, each relative to the total weight of the starting materials, are used.

13. Method according to claim 11 or 12,
**characterised in that** epoxy resin is used as the binding agent.

14. Method according to any one of claims 11 to 13,
**characterised in that** after demoulding the moulded part is cut to size and/or is subjected to a further shaping process, preferably by milling.

## Revendications

1. Pièce moulée statiquement neutre, destinée à être fixée sur le mur ou le plafond d'un bâtiment, la pièce moulée contenant au moins une matière de charge minérale légère et un liant,
**caractérisée**
a. **en ce que** la part de matière de charge minérale légère s'élève à de 75 à 95 % en poids, en rapport au poids total des matières de départ et en ce que la matière de charge minérale légère comprend des particules soufflées d'au moins une roche volcanique riche en verre, notamment de l'obsidienne ou de la vermiculite, avec une structure à cellules fermées et une surface fermée, de préférence de type verre ou frittée,
b. par ailleurs en ce que la part en liant s'élève à de 5 à 25 % en poids, en rapport au poids total des matières de départ et comprend au moins un liant organique, notamment de la résine époxy.

2. Pièce moulée selon la revendication 1,
**caractérisée en ce que** la part en matière de charge minérale légère s'élève à de 80 à 90 % en poids, en rapport au poids total des matières de départ.

3. Pièce moulée selon la revendication 1 ou la revendication 2,
**caractérisée en ce que** la part en liant s'élève à de 10 à 20 % en poids en rapport au poids total des matières de départ.

4. Pièce moulée selon l'une quelconque des revendications précédentes,
**caractérisée en ce que** la masse volumique apparente de la pièce moulée s'élève à de 450 à 750 kg/m³, de préférence à de 500 à 700 kg/m³, de matière plus préférée, à de 550 à 650 kg/m³.

5. Pièce moulée selon l'une quelconque des revendications précédentes,
**caractérisée en ce que** le module d'élasticité de la pièce moulée s'élève à de 1450 à 2000 N/mm², de préférence à de 1600 à 1800 N/mm².

6. Pièce moulée selon l'une quelconque des revendications précédentes,
**caractérisée en ce que** la conductibilité thermique λ de la pièce moulée est < 200 mW/(m^{∗}K), de préférence < 175 mW/(m^{∗}K), de manière plus préférée < 150 mW/(m^{∗}K).

7. Pièce moulée selon l'une quelconque des revendications précédentes,
**caractérisée en ce que** la pièce moulée n'est pas combustible, la pièce moulée devant être affectée de préférence à la classe de feu A2 -s1, d0 selon la norme EN 13501-1.

8. Pièce moulée selon l'une quelconque des revendications précédentes,
**caractérisée en ce que** la pièce moulée a la forme d'un profilé et est adaptée pour créer des cimaises, des appuis de fenêtres, des arcs de décharge de fenêtres, notamment des arcs ronds, en anses de panier et des arcs brisés autoporteurs et similaires.

9. Pièce moulée selon l'une quelconque des revendications précédentes,
**caractérisée en ce que** la pièce moulée a la forme d'une plaque ou d'un bloc et est adaptée pour créer des demi-boutisses, des chapiteaux, des soutiens d'appuis de fenêtres et similaires.

10. Pièce moulée selon l'une quelconque des revendications précédentes,
**caractérisée en ce que** la pièce moulée est conçue en tant que corps creux.

11. Procédé destiné à fabriquer une pièce moulée selon l'une quelconque des revendications précédentes, lors duquel on mélange au moins une matière de charge minérale légère et un liant et on comprime le mélange en une pièce moulée dans un moule, en ajoutant de la pression et/ou de la chaleur,
**caractérisé en ce qu'**on utilise de 75 à 95 % en poids d'au moins une matière de charge minérale légère et de 5 à 25 % en poids d'au moins un liant, chaque fois en rapport au poids total des matières de départ, des particules soufflées d'au moins une roche volcanique, riche en verre, notamment de l'obsidienne ou de la vermiculite, avec une structure à cellules fermées et/ou une surface fermée, de préférence de type verre ou frittée étant utilisées en tant que matière de charge minérale légère et au moins un liant organique étant utilisé.

12. Procédé selon la revendication 11,
**caractérisé en ce qu'**on utilise de 80 à 90 % en poids d'au moins une matière de charge minérale légère et de 10 à 20 % en poids d'au moins un liant, chaque fois en rapport au poids total des matières de départ.

13. Procédé selon la revendication 11 ou 12,
**caractérisé en ce qu'**on utilise de la résine époxy en tant que liant.

14. Procédé selon l'une quelconque des revendications 11 à 13,
**caractérisé en ce qu'**après l'avoir retirée du moule, on coupe à dimension la pièce moulée et/ou on la soumet à un autre processus de façonnage, de préférence par fraisage.
